# EUROPEAN PATENT SPECIFICATION

(11) **EP 1 074 751 B1**
(45) Date of publication and mention of the grant of the patent: **10.11.2004**
(21) Application number: 99306196.9
(22) Date of filing: 04.08.1999
(51) Int. Cl.: F16B 5/06

(54) **Mounting structure with U-clip**
Montagestruktur mit U-förmiger Klammer
Structure de montage à clip en U

(43) Date of publication of application: 07.02.2001
(73) Proprietor: Piolax Inc., Yokohama-shi, Kanagawa-ken (JP)
(72) Inventor: Shinozaki, Nobuya, Yokohama-shi, Kanagawa-ken (JP)
(74) Representative: Whitten, George Alan

(56) References cited:
- EP-A- 0 814 273
- US-A- 4 644 612
- US-A- 5 367 751

## Description

The present invention relates to a mounting structure with a so-called "U-clip" and in particular, to a mounting structure for mounting a bossed first member, such as a vehicular trim member, to a receiving second member, such as a vehicular panel, or vice versa, with a U-clip inserted therebetween that grips a boss of the first member to be pushed together into an opening of the second member.

Japanese Patent Application Laid-Open Publication No. 6-49928 has disclosed a mounting structure for mounting a vehicular component. In this mounting structure, a trim member which has a boss integrally formed on a rear side thereof, is mounted via a metallic U-clip to a mounting hole of a panel. The boss has an engagement hole formed provided therethrough. The clip has a pair of arms defining a so-called U-form that appears to be a C-form as they are bent inwardly in this case. The pair of arms each have a grasping sub-arm cutout therefrom and additionally bent inwards at a tip thereof thereby forming a pair of grasping sub-arms.

For mounting the trim member to the panel, the boss of the trim member is first inserted from ahead, between the pair of grasping sub-arms, so that the bent tips of the sub-arms resiliently snap in the engagement hole of the boss, at both ends of the hole, whereby the metal clip is assembled to the boss in a locking manner. The locking engagement is effected by the bent tips of sub-arms of the metallic clip, and ensures a tight joining between the metal clip and the boss.

Next, the metal clip is rearwardly pushed into the mounting hole of the panel, so that it passes through the mounting hole as the arms flex. A bent portion of each arm is then engaged with an edge of the mounting hole, thereby simply and quickly mounting the trim member to the panel.

In the conventional mounting structure, therefore, the secure mounting of the trim member to the panel is effected by a locking engagement between the bent tip portion and the engagement hole and a strong resiliency of the metallic U-clip.

In related fields, such a mounting sometimes need a modification or correction. The conventional structure however is inadequate therefor. Further, when the trim member is pushed into the panel, there is a tendency for an unpleasant rubbing sound to be generated between the metal panel mounting hole and the metal clip.

EP-A-0814273 discloses a component mounting structure for mounting a component to a mounting hole in a component receiving member, the structure comprising: a boss protruding from said component and having a plurality of paired ribs; and a U-shaped resinous clip for engaging with the boss and the mounting hole.

The present invention has been conceived with such points in view.

The present invention provides a component mounting structure for mounting a component to a mounting hole in a component receiving member, the structure comprising: a boss to protrude from said component and having a plurality of paired ribs; a U-shaped resinous clip for engaging with the boss and the mounting hole, characterised in that the U-shaped resinous clip comprises a plurality of paired side walls, each pair of side walls having a projection on at least one of the side walls thereof such that, for each pair of side walls, the lateral distance between the projection and the opposing lateral side wall or between projections is greater than the lateral distance between the paired ribs, so that when the boss is engaged with the U-shaped resinous clip the projections bite into the ribs.

Preferred aspects of the invention are defined in the accompanying claims.

In order that the present invention may be well understood, some embodiments thereof, which are given by way of example only, with now be described with reference to the accompanying drawings, in which:
Fig. 1 is an exploded perspective view of a component mounting structure according to an embodiment of the invention;
Fig. 2 is a cross-section view of the structure shown in Fig. 1, at the boss end of a trim member;
Fig. 3A through Fig. 3D are drawings which illustrate a resinous clip of the structure of Fig. 1, in which Fig. 3A is a front view, Fig. 3B is a side view, Fig. 3C is a plan view, and Fig. 3D is a longitudinal section;
Fig. 4 is a partial longitudinal section of the structure of Fig. 1;
Fig. 5 is a partial cross-section view of the structure of Fig. 1, showing the condition in which the resinous clip mounted to the boss is pushed into the mounting hole of a panel;
Fig. 6A is a partial longitudinal cross-section view of the structure of Fig. 1, showing the condition in which the component is mounted to a panel, Fig. 6B is a longitudinal cross-section view from the side, and Fig. 6C is a lateral cross-section view from the side;
Fig. 7 is a partial side view of a component mounting structure according to another embodiment of the invention;
Fig. 8 is a detailed plan view of an arm of a U-clip in a component mounting structure according to another embodiment of the invention; and
Fig. 9 is a plan view of a component mounting structure according to another embodiment of the invention.

In the description of the embodiments that follow, like members are designated by like reference characters.

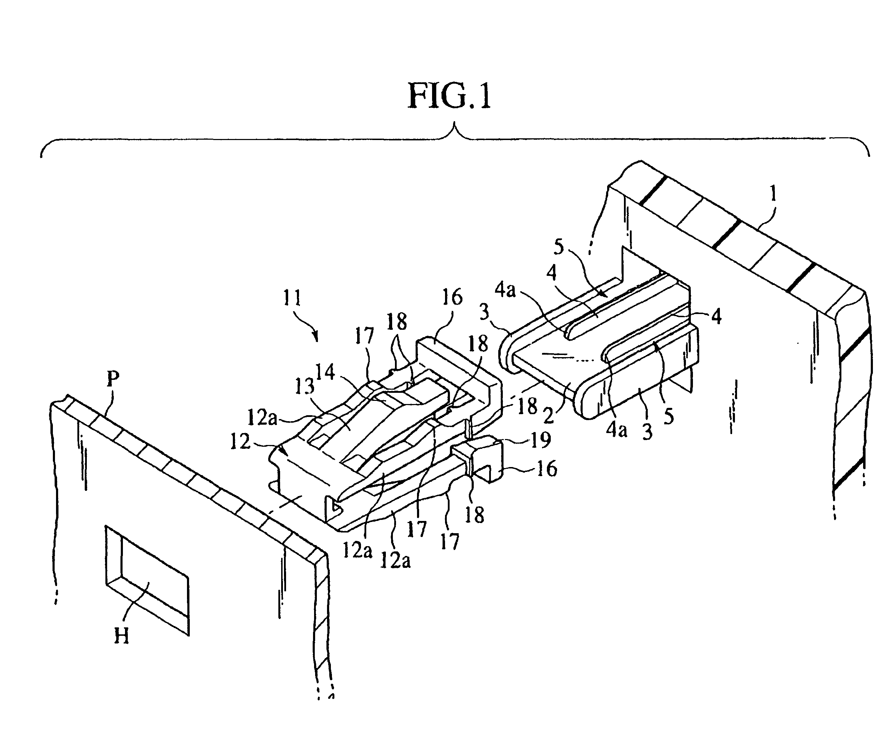

As shown in Fig. 1, a trim member 1 used as a component in a vehicle, and which has an integrally formed boss 2, is mounted by a resinous clip 11 to a panel P, which is the component-receiving member, this panel P having formed in it a mounting hole H.

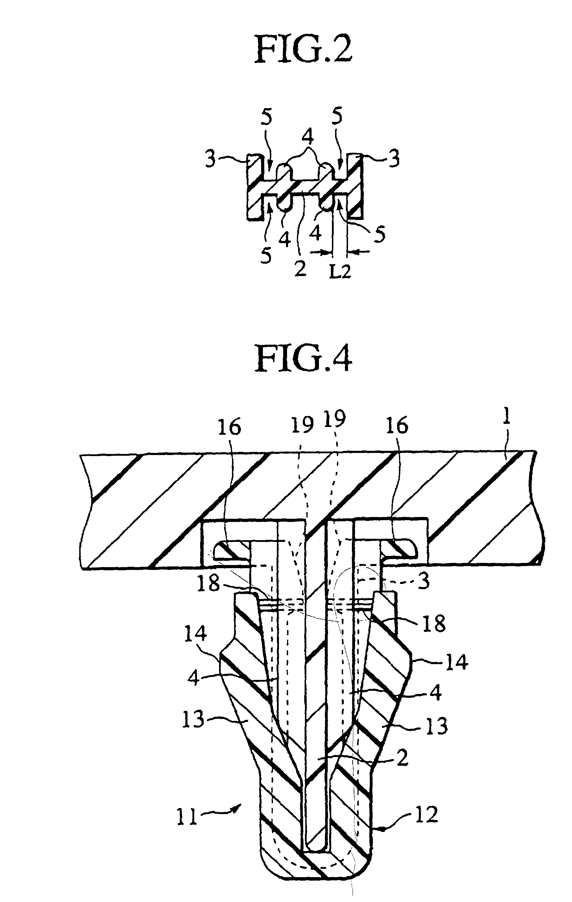

As shown in Fig. 2, there is a pair of outside ribs 3, which are formed integrally with the boss 2 at the edges thereof, and which extend in the axial, or longitudinal, direction thereof over the entire length of the boss 2. Inside the outside ribs 3, there are two inside ribs 4, which protrude at a prescribed distance, these also being formed integrally with the boss 2. The outside ribs 3 and the inside ribs 4 are mutually parallel and are paired together so as to define between them receptor grooves 5. The outer ribs 3 are formed so as to extend over the entire length of the boss 2, while the inside ribs 4 extend continuously until a point before reaching the end of the boss 2, a taper 4a being purposely imparted to the ends of the inside ribs 4. The above-noted receptor grooves 5 are formed so as to have a depth that enable the burying of at least 2/3 of a protrusion, to be described below.

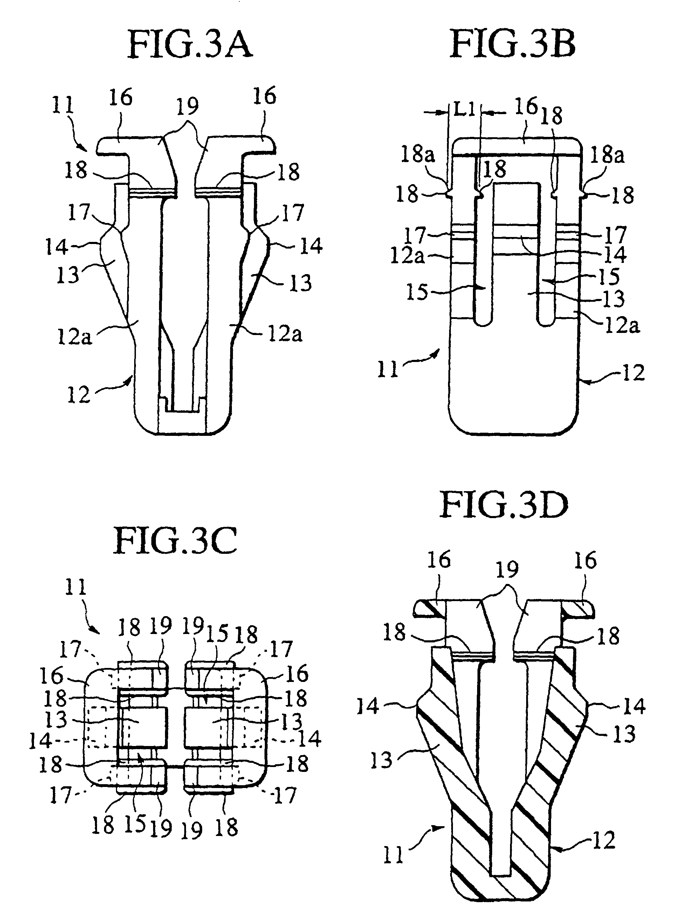

The resinous clip 11 is formed from a material that is harder than that of the boss 2. For example, if the boss 2 is formed along with the trim member 1 of polypropylene, the resinous clip 11 can be formed of polyacetal. As shown in Fig. 3, a pair of holding feet 13, which have raised shoulders 14 at the center of each of the side walls 12 that form a U-shape are provided between the longitudinal strips 15, so that they can flex independently. The upper edges of the side wall parts 12a of the side walls 12 that are divided by the holding feet 13 are joined by the outside-facing flange 16, which has the shape of a squared C, a raised shoulder 17 being formed in substantially the same position as the raised shoulder 14 of the holding feet 13, and a pair of projections 18 extending over the entire thickness of the side parts 12a. The projections are provided at an end portion of the side parts 12a, and are spaced from the respective raised shoulders 17 in the longitudinal direction by a prescribed distance. Taper cut guide surfaces 19 are formed on the upper inner surfaces of the side parts 12a of the side walls 12, so as to be in mutual opposition.

The spacing L1 of the projections 18 is established so as to be larger than the distance between the pair of inner and outer ribs 3 and 4, which is L2, so that in the free condition there is guidance into the receptor grooves 5, which are defined between the outer ribs 3 and the inner ribs 4, the tapers at the ends of the inner ribs 4. In the mounted condition pushed into the mounting hole H of the panel, by virtue of the abutment of the raised shoulders 17 up against the inner peripheral surface of the mounting hole H, there is pressure in the direction toward the center of the mounting hole H, which is the direction of the receptor grooves 5 that are defined between the outer ribs 3 and the inner ribs 4. In this embodiment, in which there is a purposeful imparting of a tapered shape 18a on the mounting direction surface with respect to the boss 2 of the protrusion 18, that is, on the upper edge surface, there is only one pair of projections 18 provided on each of the parts 12a, with a projection on each side thereof. There are cases, however, in which it would be preferable to have two or more pairs of projections 18 on each part 12a.

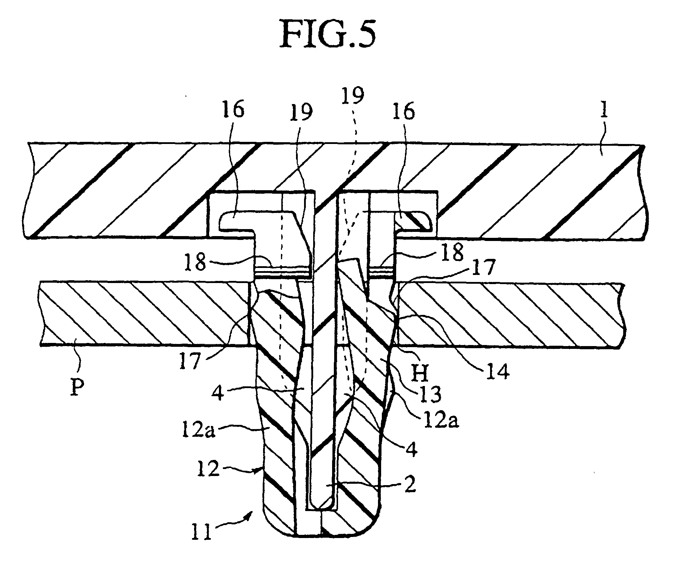

Using the resinous clip 11 to mount the trim member 1 to the component-receiving panel P, the boss 2 is first fitted in-between the two side walls 12 of the resinous clip 11, guided by the taper cut surfaces 19, as shown in Fig. 4. The boss 2 makes ultimate contact with the bottom part of the resinous clip 11 as it spreads the side walls 12 outward, thereby mounting the resinous clip 11 to the boss 2 of the component 1. When this is done, the pair of projections 18 are smoothly guided into the receptor grooves 5, which are defined between the outer ribs 3 and the inner ribs 4, guided by the tapers 4a at the end edge of the inner ribs 4 and the tapers 18a that the upper end surfaces of the projections 18.

Having been guided into the receptor grooves 5, the projections 18 bite further into the side surfaces of the outer ribs 3 and the inner ribs 4, which define the receptor grooves 5.

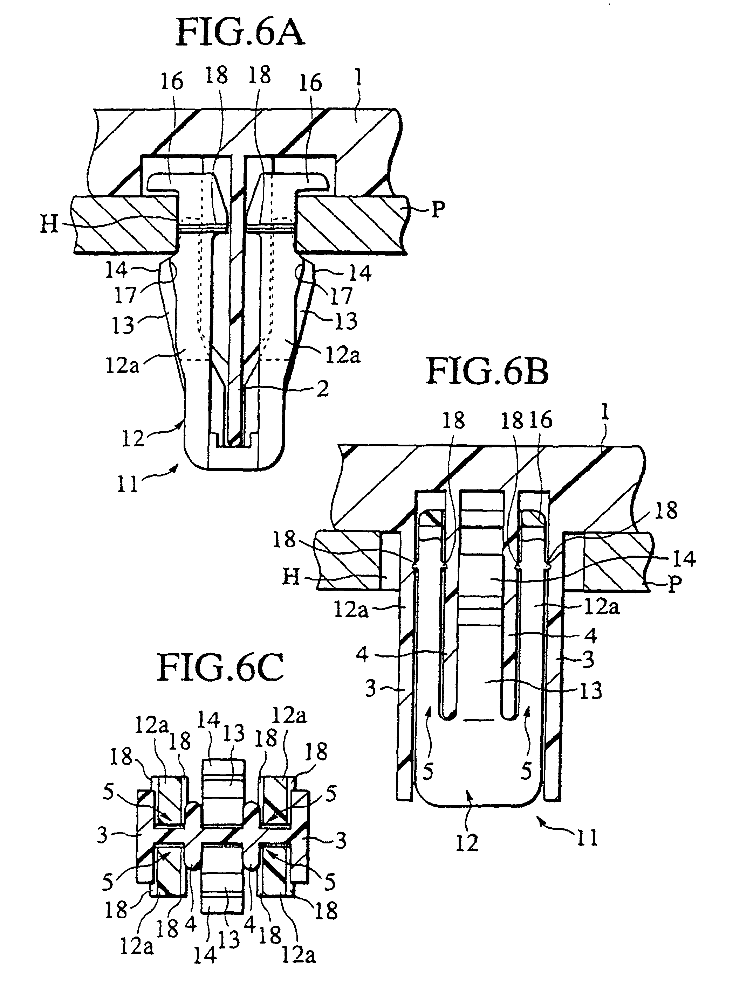

Next, in this condition the resinous clip 11 is pushed into the mounting hole H of the panel P. As shown in Fig. 5, the raised shoulders 14 of the pair of holding feet 13 abut against the inner peripheral surface of the mounting hole H, passing through the mounting hole H as they flex sufficiently, the raised shoulders 17 of the side parts 12a of the side walls 12 also abutting up against the inner peripheral surface of the mounting hole H and flexing as they pass through the mounting hole, so that ultimately, as shown in Fig. 6, each of the raised shoulders 14 and 17 are resiliently held at the edge of the mounting hole H of the panel P, thereby mounting the trim member 1 quickly and easily to the panel P.

The projections 18 of the side parts 12a and the raised shoulders 17 are at a certain vertical (i.e., longitudinal) distance from one another, thereby sufficiently allowing the flexure of the side parts 12a inward to permit the U-shaped clip 11 to be engaged with the mounting hole H. Flexure of the side parts 12a is shown in Figure 5. After passing through the mounting hole H, springback is possible, enabling the raised shoulders 17 of the side pans 12a to be reliably held at the edges of the mounting hole H.

When the side parts 12a of the side walls 12 of the resinous clip 11 abut against the inner peripheral surface of the mounting hole H and flex inward as they pass through the mounting hole H, the pair of projections 18 are automatically pressed into the corresponding receptor grooves 5, the difference in dimensions and hardness therebetween causing a forcible biting into the outer ribs 3 and the inner ribs 4, which define the receptor grooves 5, thereby forming a fast joining between the resinous clip 11 and the boss 2 of the component 1.

The above-noted embodiment provides a fast joining between the resinous clip 11 an the boss 2, thereby making it possible to mount a component 1 to a panel P using a resinous clip 11 in the same manner as would be done with a metal clip. Even in the case in which the panel P is made of a metal, such as sheet steel, when the resinous clip 11 is pushed into the mounting hole H thereof, there is no unpleasant rubbing sound that develops between the panel P mounting hole H and the resinous clip 11.

Even when the component 1 is removed from the panel P, the resinous clip 11 remains joined to the boss 2 as it is pulled out of the mounting hole H of the panel P, a distinct benefit from the standpoint to handling ease.

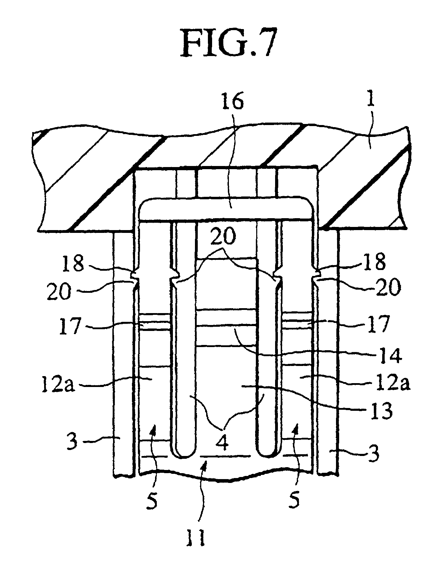

Because the projections 18 bite into the side surfaces of the outer ribs 3 and the inner ribs 4, it is possible to maintain the joint with the boss 2 when the component 1 is pulled from the panel P. As shown in Fig. 7, it is possible to form stopper walls 20 that abut against the lower edge surface of the projections 18, the stopper walls being provided in pairs on the outer ribs 3 and inner ribs 4. In this case, when the trim member 1 is pulled from the panel P, there is an even more secure joining between the resinous clip 11 and the boss 2.

As will be seen from the foregoing embodiments, the invention employs a set of lateral projections 18 formed on an arm (as a side part 12a of a side wall 12) of a U-clip 11 to be forced together between a pair of ribs 3, 4 provided on a boss 2, allowing for a sufficient frictional engagement to be achieved between the boss 2 and the U-clip 11. The number of projections 18 may be varied, as necessary.

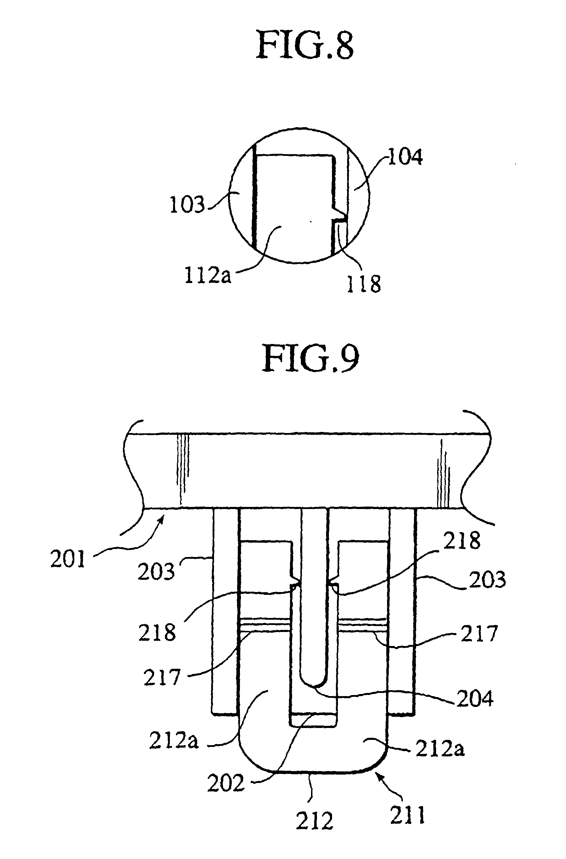

Figs. 8 and 9 illustrate embodiments of the invention in which a respective arm of a resin-molded U-clip has a single projection (118, 218) formed on a lateral side thereof to be brought into a frictional engagement with a lateral side of a rib on a boss.

In the embodiment of Fig. 8, a respective arm 112a (of a U-clip similar to a described one) has a single projection 118 formed on an inner lateral side thereof to be forced together between a pair or ribs 103, 104 on a side of a boss.

In the embodiment of Fig. 9, a boss 202 of a trim member 201 is formed at each of upside and downside thereof with left and right axial ribs 203 and a central axial rib 204. A U-clip 211 comprises a pair of upper and lower walls 212 that cooperatively define a U-form in side view. The upper and lower walls 212 are each bifurcated to provide a pair of left and right arms 212a each vertically raised at their axially intermediate parts 217 to provide shoulders 217 for engagement with an opening of an unshown panel. A distal end portion of each arm 212a is formed at a transversely inner side thereof with a projection 218 to be forced together between the left and central ribs 203, 204 or between the central and right ribs 204, 203, for frictional engagement to be achieved between the boss 202 and the U-clip 211.

It will be appreciated from the foregoing that each of the embodiments provide a mounting structure with a U-clip that is adaptive for a modification or correction and has a reduced tendency for an unpleasant rubbing sound to be generated.

These advantages are achieved by the provision of a mounting structure comprising a boss element formed with a pair of ribs, a U-clip member configured with a pair of arms defining a U-form and either formed at a lateral side thereof with a projection to be forced together between the pair or ribs, and an opening element for receiving the pair of arms.

As either arm of the U-clip is forced between the pair of ribs together with the projection formed on a lateral side of the arm, there is established a sufficient frictional engagement between the ribs and the arm to effect a secure joining between the boss element and the clip. Such a frictional engagement allows relatively facile disengagement and reengagement, permitting a modification or correction of the mounting structure. The either arm may preferably be formed at an opposite lateral side thereof with another projection to be forced together between the pair of ribs. The U-clip or at least the arms may preferably be resin-made to have a reduced tendency for an unpleasant rubbing sound to be generated.

The embodiments also provide a mounting structure comprising a first member provided with a boss formed with a pair of ribs, a U-clip member configured with a pair of arms defining a U-form and either formed at a lateral side thereof with a projection forced together between the pair of ribs, and a second member formed with an opening for receiving the pair of arms.

The first member is mounted to the second member by combination of the boss, the U-clip member and the opening.

The boss may be formed as one with the component, and mounted to a panel having a mounting hole, via a clip, in which the boss has a pair of ribs formed thereon in the axial direction thereof, and wherein the clip is made of resin and has two side arms, which define a U-shape, these side arms haying formed thereon a pair of protrusions which bite between the pair of ribs, the spacing between the pair of protrusions being larger than the distance between the pair of ribs.

By forcibly causing the pair of projections on the resinous clip side to bite in between the pair of rib walls on the boss side, using the difference in dimensions therebetween, the resinous clip and boss are securely fastened together as one. The component is held securely to the receiving-side member using the resinous clip, and when the resinous clip is pushed into the mounting hole, there is no unpleasant rubbing sound between the clip and the metal panel.

A taper may be formed at the end edge of the ribs, and the mounting direction side when mounting to the protrusion boss is tapered.

Thus, when fitting the resinous clip to the boss, it is possible to smoothly guide the projections between the ribs.

The paired projections, during engagement, are guided between the rib walls, along a taper at the end edge of the rib walls, and when it is pressed into a mounting hole in the component-receiving member, it is pressed at the inner peripheral surface of the mounting hole in the direction of the center of the mounting hole.

Accordingly, as the resinous clip is pushed into the mounting hole in the component-receiving member, the projections are pressed in the direction of the center of the mounting hole, so as to bite strongly into the sides of the ribs.

The projections may be formed continuously in the thickness direction of the side walls, so that there is a vertical space established with respect to a raised shoulder that mates with the mounting hole of the component-receiving member formed on the side walls.

In addition to being able to encourage flexure toward the inside of the side walls on which is formed a raised shoulder, it is also possible for the side walls to spring back, thereby securely holding the raised shoulder at the edge of the mounting hole in the component-receiving member.

The opposing sides of the pair of ribs may have formed on them a stopper wall that mates with the projections. With this arrangement, there is a further improvement in the secureness of the joining of the resinous clip with the boss, when removing the component from the component-receiving member, it is possible to pull the component out from the mounting hole of the component-receiving member, with the clip remaining joined to the boss.

## Claims

1. A component mounting structure for mounting a component (1) to a mounting hole (H) in a component receiving member (P), the structure comprising: a boss (2) to protrude from said component and having a plurality of paired ribs (3, 4; 103, 104; 203, 204); a U-shaped resinous clip (11; 211) for engaging with the boss and the mounting hole, **characterised in that** the U-shaped resinous clip comprises a plurality of paired side walls (12a; 112a; 212a), each side wall having a projection (18; 118; 218) on at least one side of the side walls such that the lateral distance between the projection and the opposing lateral side or between projections on both sides of the side walls is greater than the lateral distance between the paired ribs, so that when the boss is engaged with the U-shaped resinous clip the projections bite into the ribs.

2. A structure as claimed in claim 1, wherein said plurality of pairs of ribs comprise two lateral ribs (203) and a central rib (204) paired with respective said lateral ribs and when the boss (202) is engaged with the U-shaped resinous clip (211) a said projection (218) bites into each side wall of the central rib.

3. A structure as claimed in claim 1, wherein each side wall (12a) of a said pair of side walls is provided with a said projection (18).

4. A structure as claimed in any of the preceding claims, wherein said projections (18; 118; 218) and the longitudinal ends of the ribs (3, 4; 103, 104; 203, 204) have respective tapered portions (18a; 4a) to facilitate engagement between the U-shaped resinous clip (11; 211) and the boss (2).

5. A structure as claimed in claim 4, wherein during mounting of said component (1) with said component receiving member (P), the projections (18; 118; 218) are guided by said tapered portions (18a) and along respective rib walls, and the paired side walls (12a; 112a; 212a) of the U-shaped clip are deflected inwardly towards a centre of the mounting hole (H) by the inner peripheral surface of the mounting hole.

6. A structure as claimed in any of the preceding claims, wherein the projections (18; 118; 218) extend over the entire thickness of the side walls (12a; 112a; 212a) and said side walls have respective raised shoulders (17) spaced in the longitudinal direction from the projections to allow sufficient inward flexure of the side walls to permit the U-shaped clip to be engaged with the mounting hole (H).

7. A structure as claimed in any of the preceding claims, wherein the rib walls are provided with stoppers (20) for mating with respective said projections (18; 118; 218) for resisting disengagement of said U-shaped resinous clip (11; 211) from said boss (2).

8. A structure as claimed in any of the preceding claims, wherein the boss (2) is fixable to said component (1) so as to protrude therefrom.

## Patentansprüche

1. Komponentenmontagestruktur zum Anbringen einer Komponente (1) in einem Montageloch (H) in einem Komponentenaufnahmeglied (P), die Struktur umfassend: einen Ansatz (2), der von der Komponente vorstehen soll und mehrere gepaarte Rippen (3, 4; 103, 104;203, 204) aufweist; eine U-förmige Harzklammer (11; 211) zum Eingreifen mit dem Ansatz und dem Montageloch, **dadurch gekennzeichnet, daß** die U-förmige Harzklammer mehrere gepaarte Seitenwände (12a; 112a; 212a) umfaßt, wobei jede Seitenwand einen Vorsprung (18; 118; 218) auf zumindest einer Seite der Seitenwände aufweist, so daß der seitliche Abstand zwischen dem Vorsprung und der gegenüberliegenden seitlichen Seite oder zwischen Vorsprüngen auf beiden Seiten der Seitenwände größer als der seitliche Abstand zwischen den gepaarten Rippen ist, so daß die Vorsprünge in die Rippen packen, wenn der Ansatz mit der U-förmigen Harzklammer in Eingriff ist.

2. Struktur nach Anspruch 1, wobei die mehreren Rippenpaare zwei seitliche Rippen (203) und eine mittlere Rippe (204) umfassen, die mit jeweiligen seitlichen Rippen gepaart sind, und ein Vorsprung (218) in jede Seitenwand der mittleren Rippe packt, wenn der Ansatz (202) mit der U-förmigen Harzklammer (211) in Eingriff gebracht ist.

3. Struktur nach Anspruch 1, wobei jede Seitenwand (12a) eines Seitenwandpaares mit einem Vorsprung (18) versehen ist.

4. Struktur nach einem der vorhergehenden Ansprüche, wobei die Vorsprünge (18; 118; 218) und die Längsenden der Rippen (3, 4; 103, 104; 203, 204) jeweilige sich verjüngende Abschnitte (18a; 4a) aufweisen, um den Eingriff zwischen der U-förmigen Harzklammer (11; 211) und dem Ansatz (2) zu erleichtern.

5. Struktur nach Anspruch 4, wobei während des Anbringens der Komponente (1) an dem Komponentenaufnahmeglied (P) die Vorsprünge (18,; 118; 218) durch die sich verjüngenden Abschnitte (18a) und entlang jeweiliger Rippenwände geführt sind und die gepaarten Seitenwände (12a; 112a; 212a) der U-förmigen Klammer durch die innere Umfangsfläche des Montagelochs (H) nach innen in Richtung auf eine Mitte des Montagelochs (H) abgelenkt sind.

6. Struktur nach einem der vorhergehenden Ansprüche, wobei sich die Vorsprünge (18; 118; 218) über die gesamte Stärke der Seitenwände (12a; 112a; 212a) erstrecken und die Seitenwände jeweilige erhöhte Schultern (17) aufweisen, die in der Längsrichtung von den Vorsprüngen räumlich getrennt sind, um eine ausreichende Biegung der Seitenwände nach innen zu erlauben, um zu gestatten, daß die U-förmige Klammer mit dem Montageloch (H) in Eingriff bringbar ist.

7. Struktur nach einem der vorhergehenden Ansprüche, wobei die Rippenwände mit Anschlägen (20) zum Zusammenpassen mit jeweiligen der Vorsprünge (18; 118; 218) versehen sind, um der Lösung der U-förmigen Harzklammer (11; 211) aus dem Ansatz (2) Widerstand entgegenzusetzen.

8. Struktur nach einem der vorhergehenden Ansprüche, wobei der Ansatz (2) so an der Komponente (1) befestigbar ist, daß er davon vorsteht.

## Revendications

1. Structure de montage d'un composant destinée au montage d'un composant (1) dans un trou de montage (H) dans un élément de réception de composant (P), la structure comprenant : un bossage (2) devant faire saillie depuis ledit composant et possédant une pluralité de paires de nervures (3, 4 ; 103, 104 ; 203, 204) ; un étrier en résine en forme de U (11 ; 211) destiné à s'engager avec le bossage et le trou de montage, **caractérisée en ce que** l'étrier en résine en forme de U comprend une pluralité de paires de parois latérales (12a ; 112a ; 212a), chaque paroi latérale possédant une saillie (18 ; 118 ; 218) sur au moins un côté des parois latérales de manière à ce que la distance latérale entre la saillie et le côté latéral opposé ou entre les saillies sur les deux côtés des parois latérales soit supérieure à la distance latérale entre les paires de nervures, si bien que lorsque le bossage est engagé avec l'étrier en résine en forme de U, les saillies mordent dans les nervures.

2. Structure selon la revendication 1, dans laquelle ladite pluralité de paires de nervures comprend deux nervures latérales (203) et une nervure centrale (204) en paire avec lesdites nervures latérales respectives et lorsque le bossage (202) est engagé avec l'étrier en résine en forme de U (211), une dite saillie (218) mord dans chaque paroi latérale de la nervure centrale.

3. Structure selon la revendication 1, dans laquelle chaque paroi latérale (12a) d'une dite paire de parois latérales est dotée d'une dite saillie (18).

4. Structure selon l'une quelconque des revendications précédentes, dans laquelle lesdites saillies (18 ; 118 ; 218) et les extrémités longitudinales des nervures (3, 4 ; 103, 104 ; 203, 204) possèdent des parties effilées respectives (18a ; 4a) afin de faciliter l'engagement entre l'étrier en résine en forme de U (11 ; 211) et le bossage (2).

5. Structure selon la revendication 4, dans laquelle pendant le montage dudit composant (1) avec ledit élément de réception de composant (P), les saillies (18 ; 118 ; 218) sont guidées par lesdites parties effilées (18a) et le long des parois des nervures respectives, et les paires de parois latérales (12a ; 112a ; 212a) de l'étrier en forme de U sont inclinées vers l'intérieur vers un centre du trou de montage (H) par la surface périphérique interne du trou de montage.

6. Structure selon l'une quelconque des revendications précédentes, dans laquelle les saillies (18 ; 118 ; 218) s'étendent sur toute l'épaisseur des parois latérales (12a ; 112a ; 212a) et lesdites parois latérales possèdent des épaulements surélevés respectifs (17) espacés dans la direction longitudinale depuis les saillies pour permettre un fléchissement vers l'intérieur suffisant des parois latérales pour permettre à l'étrier en forme de U d'être engagé avec le trou de montage (H).

7. Structure selon l'une quelconque des revendications précédentes, dans laquelle les parois des nervures sont dotées de butées (20) destinées à accoupler lesdites saillies respectives (18 ; 118 ; 218) afin de résister au désengagement dudit étrier en résine en forme de U (11 ; 211) depuis ledit bossage (2).

8. Structure selon l'une quelconque des revendications précédentes, dans laquelle le bossage (2) peut se fixer audit composant (1) de manière à faire saillie depuis celui-ci.
